# EUROPÄISCHE PATENTSCHRIFT

(11) **EP 2 675 656 B1**
(45) Veröffentlichungstag und Bekanntmachung des Hinweises auf die Patenterteilung: **16.01.2019**
(21) Anmeldenummer: 12703977.4
(22) Anmeldetag: 09.02.2012
(51) Int. Cl.: B60N 2/225

(54) **BESCHLAG FÜR EINEN FAHRZEUGSITZ UND VERFAHREN ZUR HERSTELLUNG DESSELBEN**
FITTING FOR A VEHICLE SEAT AND METHOD FOR PRODUCING SAME
PIÈCE POUR SIÈGE DE VÉHICULE ET PROCÉDÉ DE FABRICATION DE CETTE PIÈCE

(30) Priorität: 14.02.2011 DE 102011012076
(43) Veröffentlichungstag der Anmeldung: 25.12.2013
(73) Patentinhaber: Adient Luxembourg Holding S.à r.l., 1855 Luxembourg (LU)
(72) Erfinder: STILLEKE, Martin, 45657 Recklinghausen (DE); MUSIAN, Jonni, 67655 Kaiserslautern (DE)
(74) Vertreter: Liedhegener, Ralf
(86) Internationale Anmeldenummer: PCT/EP2012/000583
(87) Internationale Veröffentlichungsnummer: WO 2012/110213

(56) Entgegenhaltungen:
- DE-A1- 3 515 180
- DE-U1-202010 012 621
- US-A- 5 295 390
- US-A1- 2005 231 015

## Beschreibung

Beschlag für einen Fahrzeugsitz und Verfahren zur Herstellung desselben Die Erfindung betrifft einen Beschlag für einen Fahrzeugsitz mit den Merkmalen des Oberbegriffs des Anspruches 1 und ein Verfahren zur Herstellung desselben mit den Merkmalen des Oberbegriffs des Anspruches 13

Ein Beschlag dieser Art ist aus der DE 20 2010 012 621 U1, die als nächstliegenden Stand der Technik betrachtet wird, bekannt. Der Exzenter, welcher zwei Keilsegmente aufweist, ist auf einem Kragen des zweiten Beschlagteils abgestützt. Der Mitnehmer, welcher den Exzenter antreibt, ist mittels einer Nabe im Kragen gelagert und axial an der Stirnfläche des Kragens abgestützt. Die als Stützfläche ausgebildete Stirnfläche des Kragens ist in Fig. 4 der DE 20 2010 012 621 U1 größer als die Wandstärke des Kragens dargestellt. Es hat sich jedoch in der Praxis gezeigt, dass eine ausreichend große Stützfläche mit bekannten Verfahren zum Kragenziehen nicht in befriedigender Qualität herstellbar ist. Die Stützfläche wirft Falten und im Randbereich der Stützfläche entsteht ein Materialeinzug, so dass der Mitnehmer nicht ausreichend abgestützt werden kann und nicht flächig an der Stützfläche anliegt.

Die DE 101 07 109 A1 offenbart ein Verfahren zum Schließen der Stoßöffnung von gerollten Lagerbuchsen mit radial nach außen weisendem Bund. Das Einbringen von in radialer Richtung verlaufenden Vertiefungen in den Bund dieser Lagerbuchsen verdrängt Material in Umfangsrichtung, so dass die Stoßöffnung geschlossen wird. Das Rollverfahren einer Lagerbuchse ist fertigungstechnisch nicht mit dem Kragenziehen verwandt und nicht auf dieses übertragbar. Das Verdrängen von Material in Umfangsrichtung des Bundes würde zudem bei Kragenzügen zu einer weiteren Faltenbildung in der Stirnfläche führen.

Es ist aus der DE 10 2004 015 977 A1 bekannt, an die Bundflächen von gerollten Gleitlagerbuchsen an deren Außen- und/oder Innenrand eine Fase zu prägen. Nachteilig ist, dass aufgrund der Fasen die Bundfläche Material aus dem radial äußeren Bereich verdrängt wird und die Stützfläche dadurch verkleinert wird.

Eine Vergrößerung der Wandstärke eines Kragenzuges wird durch ein in der US 5,295,390 beschriebenes Verfahren erreicht. Dazu wird zunächst ein Topf mit Boden gezogen und dieser Topf anschließend durch Ausstanzen des Bodens geöffnet. Dabei ist vorgesehen, dass ein Ausformwerkzeug eine in axialer Richtung ausgebildete Ringstufe umfasst, die Material in den hohlzylinderförmigen Abschnitt des Topfes verdrängt, Eine optimierte, radial nach innen abstehende Stützfläche am Ende des Kragenzuges oder ein Verfahren zur Herstellung einer solchen ist nicht offenbart.

Aus der DE 35 15 180 A1 ist ein Verfahren zum Herstellen einer Flanschenbuchse bekannt, das die folgenden Verfahrensschritte umfasst: Einführen bzw. -fügen eines zylindrischen Materialstücks in eine in einer Form ausgebildete Bohrung mittels eines Prägestempels axial von einem Ende der Form her, wobei die Bohrung eine Konfiguration hat, welche mit der endgültigen Form der Flanschenbuchse übereinstimmt; und Eintreiben eines Flanschformungsstempels in die Bohrung von dem anderen Ende der Form her, so dass dadurch das innere Ende des zylindrischen Materialstück zur Ausbildung eines Flanschs gepresst bzw. mit Druck beaufschlagt wird.

Der Erfindung liegt die Aufgabe zu Grunde, einen Beschlag der eingangs genannten Art zu verbessern, insbesondere die Qualität der Stützfläche zu optimieren, ohne den Innendurchmesser der Stützfläche zu reduzieren und ein Verfahren zur Herstellung eines solchen Beschlages zur Verfügung zu stellen. Faltenwurf und Materialeinzug in der Stützfläche sind zu vermeiden. Diese Aufgabe wird erfindungsgemäß durch einen Beschlag mit den Merkmalen des Anspruches 1 und ein Verfahren mit den Merkmalen des Anspruches 11 gelöst. Vorteilhafte Ausgestaltungen sind Gegenstand der Unteransprüche.

Für eine große Stützfläche weist der Kragen einen Bund auf, welcher nach dem Ziehen des Kragens durch Umformen des freien Endes des Kragens mit einer radialen Materialverdrängung, gegebenenfalls zusätzlich mit einer axialen Stauchung, ausgebildet wird. Um die radiale Materialverdrängung zu verbessern, wird innerhalb der Stützfläche eine Rille ausgebildet. Das Material, das aufgrund der Ausbildung der Rille verdrängt wird, stärkt den Bund, d.h. den radial abstehenden Bereich, und verbessert die Materialauffüllung an der "Ecke" des Kragens, d.h. an der radial außen gelegenen Kante der Stirnseite. Um die Rille auszubilden, weist das entsprechende Werkzeug einen Wulst auf. Der Wulst verläuft wenigstens abschnittsweise in Umfangsrichtung, so dass die Rille als Abdruck des Wulstes innerhalb der Stützfläche, d.h. im Material des Kragens im Bereich des Bundes, ausgebildet wird. Durch den Einsatz des Wulstes wird eine potentielle Materialüberlappung beim Kalibrieren des Kragens vermieden.

Die Rille weist vorzugsweise eine Tiefe von 0,5mm +/- 0,2mm auf. Diese Tiefe erweist sich für Kragenzügen von Beschlägen als ausreichend, um genügend Material in die gewünschten Bereiche zu verdrängen ohne zu hohe Spannungen in der Stützfläche zu erzeugen.

Es ist besonders vorteilhaft für die Erzeugung von ebenen Stützflächen von Beschlägen, wenn die Rille in der Stützfläche näher am Innenrand als am Außenrand der Stützfläche gelegen ist.

Die Erfindung ist vorzugsweise zur Neigungseinstellung der Lehne von Fahrzeugsitzen in Kraftfahrzeugen einsetzbar, kann aber auch für andere Einsatzzwecke verwendet werden.

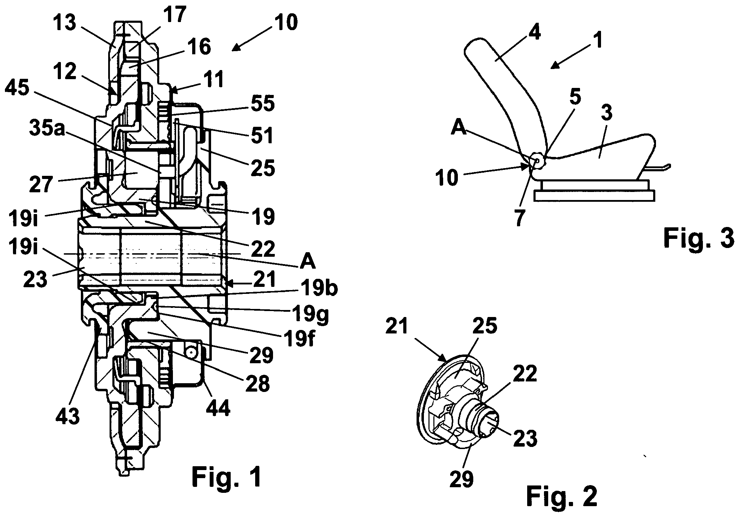

Im Folgenden ist die Erfindung anhand eines in der Zeichnung dargestellten Ausführungsbeispiels mit einer Abwandlung näher erläutert. Es zeigen
- Fig. 1: einen axialen Schnitt durch den Beschlag,
- Fig. 2: eine perspektivische Ansicht des Mitnehmers,
- Fig. 3: eine schematische Darstellung eines Fahrzeugsitzes,

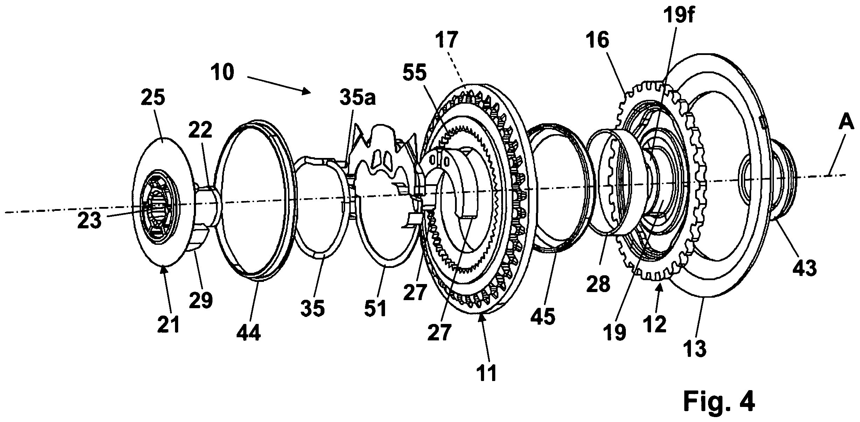

- Fig. 4: eine Explosionsdarstellung des Beschlags,
- Fig. 5: einen vergrößerten Ausschnitt von Fig. 4 nach dem Ziehen des Kragens und vor der Ausbildung des Bundes,
- Fig. 6: einen vergrößerten Ausschnitt von Fig. 4 während der Ausbildung des Bundes, und
- Fig. 7: einen vergrößerten Ausschnitt von Fig. 4 nach der Ausbildung des Bundes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert eine Achse A und die nachfolgend verwendeten Richtungsangaben eines Zylinderkoordinatensystems. Die radiale Richtung steht - wie bei Zylinderkoordinatensystemen üblich - senkrecht zur Achse A .

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum Zusammenhalt der Beschlagteile 11 und 12, ist ein Umklammerungsring 13 vorgesehen. Das Prinzip eines solchen Zusammenhalts mittels eines Umklammerungsrings ist beispielsweise in der US 6,799,806 B2 beschrieben. Der Umklammerungsring 13 besteht vorzugsweise aus Metall, insbesondere Stahl, der vorzugsweise ungehärtet ist. Der Umklammerungsring 13 weist vorzugsweise eine im wesentlichen flache Ringform auf.

Der Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen (d.h. in dessen radial äußerem Randbereich), ohne die Relativdrehung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Diese Zuordnungen der Beschlagteile 11 und 12 sind bevorzugt, wenn die radialen Abstände der Befestigungspunkte zwischen dem Beschlag 10 und einem relativ dünnen Lehnenblech als Lehnenseitenholm möglichst groß sein sollen. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist).

Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist. Innerhalb des Bauraums zwischen den beiden Beschlagteilen 11 und 12 ist optional ein Trennring 45 als interne Dichtung vorgesehen, welcher beispielsweise aus Kunststoff besteht.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die - vorzugsweise auf einem axialen Überstand der Gleitlagerbuchse 28 beweglich gelagerte - Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Außer der radialen Lagerung von Mitnehmer 21 (und Sicherungsring 43) auf dem Kragen 19 des zweiten Beschlagteils 12 ist noch eine axiale Abstützung des Mitnehmers 21 vorgesehen an einer Stützfläche 19f des Kragens 19. Der Kragen 19 weist eine von einem Hohlzylinder abweichende Form auf, insbesondere aufgrund eines (radial nach innen weisenden) Bundes 19b, dessen in axiale Richtung weisende Stirnfläche die axiale Stützfläche 19f des Kragens 19 definiert. Die radial über eine Innenfläche 19i des Grundzylinders des Kragens 19 nach innen hinein ragende Stützfläche 19f ist dadurch größer als die mittlere Querschnittsfläche des Kragens 19. Der Mitnehmer 21 weist eine zur Stützfläche 19f passende Anlagefläche auf, als welche vorliegend die in axialer Richtung weisende Stirnseite eines die Nabe 22 umrundenden Absatzes dient. Im Bereich des Mitnehmersegments 29 reicht diese Anlagefläche bis zur radial inneren Flanke des Mitnehmersegments 29.

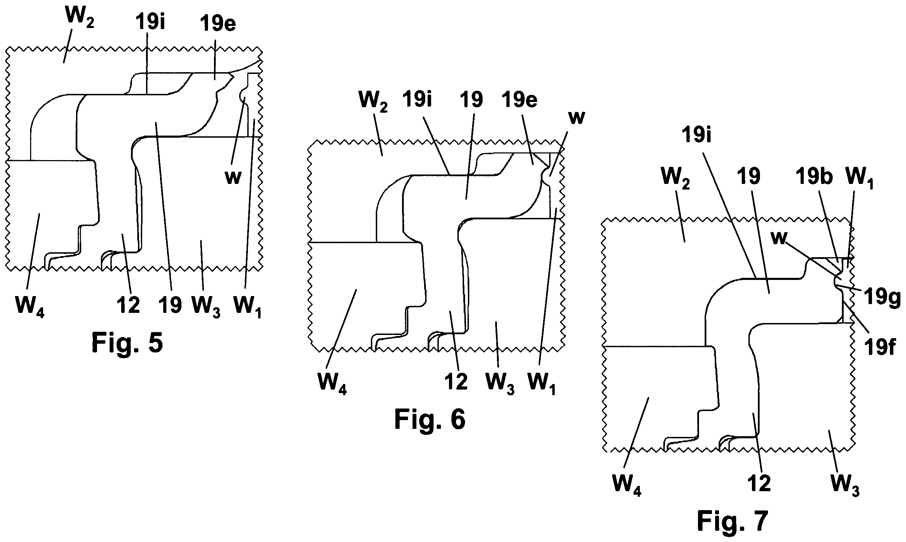

Bei der Herstellung des zweiten Beschlagteils 12 besteht am Kragen 19 die Herausforderung, die Stützfläche 19f größer als die mittlere Querschnittsfläche des Kragens 19 zu formen und den Bund 19b und dessen Stützfläche 19f über die zylindrische Innenfläche 19i des Kragens 19 radial nach innen hinein zu formen. Hierzu wird in einem ersten Schritt der Kragen 19 gezogen, wonach das freie Ende 19e des Kragens 19 in einer (radial nach innen weisenden) Trichterform mit abnehmender Materialstärke vorliegt (Fig. 5). In einem zweiten Schritt wird dann (Fig. 6) das freie Ende 19e des Kragens 19 mit mehreren Werkzeugen W₁, W₂, W₃, W₄ umgeformt, d.h. vorliegend Material verdrängt, bis der Bund 19b ausgebildet ist (Fig. 7). Dabei wird das erste Werkzeug W₁ axial auf das freie Ende 19e zu bewegt, das Werkzeug W₂, bewegt sich aus der umgekehrten Richtung auf das andere Ende des Kragens 19 zu, das dritte Werkzeug W₃ bewegt sich geringfügig auf das zweite Beschlagteil 12 zu, um dieses radial außerhalb des Kragens 19 noch geringfügig umzuformen, und das vierte Werkzeug W₄ dient als stationärer Halter und Gegenstück zum dritten Werkzeug W₃.

Um das Material besser zu verdrängen, weist das erste Werkzeug W₁ stirnseitig einen ringförmigen Wulst w auf, der in Umfangsrichtung durchgängig oder unterbrochen, d.h. wenigstens abschnittsweise, ausgebildet ist. Der Wulst w ist ungefähr auf die radial innen liegende Wand (in Fig. 5 die oben gelegene Wand) des gezogenen Kragens 19 ausgerichtet und eilt in Bewegungsrichtung des Werkzeuges W voraus. Der Wulst w kommt daher im zweiten Schritt zeitlich kurz vor den anderen, seitlich davon gelegenen Bereichen des ersten Werkzeuges W₁ in Kontakt mit dem Material des freien Endes 19e des Kragens 19. Bei der weiteren Bewegung des ersten Werkzeuges W₁, wenn das Material des freien Endes 19e des Kragens 19 vom ersten Werkzeug W₁ in Zusammenwirken mit dem zweiten Werkzeug W₂ (axial) gestaucht wird, verdrängt der Wulst w das mit ihm in Kontakt stehende Material des freien Endes 19e des Kragens 19 quer zur Bewegungsrichtung des ersten Werkzeuges W₁ (d.h. quer zur axialen Richtung), nämlich in radialer Richtung nach außen und nach innen (beispielsweise jeweils etwa hälftig). Dabei wird eine Rille 19g in der Stützfläche 19f ausgebildet. Diese Rille 19g entsteht als Abdruck des Wulstes w und verläuft entsprechend dem Wulst w wenigstens abschnittsweise in Umfangsrichtung. Die Materialverdrängung durch den Wulst w verbessert die Ausbildung des Bundes 19b, insbesondere radial nach innen, wobei der Bund 19b dann auch durch die seitlich des Wulstes w gelegenen Bereiche des ersten Werkzeuges W₁ endgültig geformt wird.

Die durchgehend umlaufend Rille 19g verläuft äquidistant zum Innenrand der Stützfläche 19f und weist vorliegend eine Tiefe von 0,5mm +/- 0,2mm auf. Grundsätzlich sind jedoch auch andere Rillentiefen möglich; in den Figuren ist zur Veranschaulichung der Erfindung eine größere Tiefe dargestellt.

Die Stützfläche 19f hat vorliegend einen Außendurchmesser von 21mm +/- 1mm und einen Innendurchmesser von 13mm +/- 1mm, wobei die Rille 19g auf einem Kreis mit einem Durchmesser von 16mm +/- 1mm liegt. Aufgrund des Bunds 19 variiert die Wandstärke des Kragens 19 über dessen axiale Erstreckung. Die minimale Wandstärke des Kragens 19 beträgt 2,7mm +/- 0,5mm.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 12: zweites Beschlagteil
- 13: Umklammerungsring
- 16: Zahnrad
- 17: Zahnkranz
- 19: Kragen
- 19b: Bund
- 19e: freies Ende
- 19f: Stützfläche
- 19g: Rille
- 19i: Innenfläche
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 45: Trennring
- 51: Sperrfeder
- 55: Verzahnung
- A: Achse
- w: Wulst
- W₁: erstes Werkzeug
- W₂: zweites Werkzeug
- W₃: drittes Werkzeug
- W₄: viertes Werkzeug

## Patentansprüche

1. Beschlag für einen Fahrzeugsitz, insbesondere für einen Kraftfahrzeugsitz,
a) mit einem ersten Beschlagteil (11) und einem zweiten Beschlagteil (12), welche relativ zueinander verdrehbar sind und welche miteinander in Getriebeverbindung stehen mittels eines Zahnkranzes (17) und eines mit dem Zahnkranz (17) kämmenden Zahnrades (16), und
b) mit einem von einem Mitnehmer (21) angetriebenen, in Umfangsrichtung umlaufenden Exzenter (27, 27) zum Antrieb einer relativen Abwälzbewegung von Zahnrad (16) und Zahnkranz (17), wobei der Mitnehmer (21) mit Spiel in einem Kragen (19) und der Exzenter (27, 27) auf dem Kragen (19) des zweiten Beschlagteils (12) gelagert ist, und wobei der Kragen (19) an seinem freien Ende einen Bund (19b) aufweist, dessen Stirnseite eine axiale Stützfläche (19f) für den Mitnehmer (21) bildet,
**dadurch gekennzeichnet, dass**
c) der Bund (19b) in der Stützfläche (19f) eine Rille (19g) aufweist, wobei der Bund (19b) nach dem Ziehen des Kragens (19) durch Umformen des freien Endes des Kragens (19) mit einer radialen Materialverdrängung ausgebildet ist, wobei zur Verbesserung der radialen Materialverdrängung innerhalb der Stützfläche (19f) die Rille (19g) ausgebildet ist.

2. Beschlag nach Anspruch 1, **dadurch gekennzeichnet, dass** die Rille (19g) wenigstens abschnittsweise in Umfangsrichtung verläuft.

3. Beschlag nach Anspruch 2, **dadurch gekennzeichnet, dass** die Rille (19g) durchgehend umlaufend und äquidistant zum Innenrand der Stützfläche (19f) ausgebildet ist.

4. Beschlag nach Anspruch 2 oder 3, **dadurch gekennzeichnet, dass** die Rille (19g) in der Stützfläche (19f) näher am Innenrand als am Außenrand der Stützfläche (19f) gelegen ist.

5. Beschlag nach einem der vorhergehenden Ansprüche, **dadurch gekennzeichnet, dass** die Rille (19g) eine Tiefe von 0,5mm +/- 0,2mm aufweist.

6. Beschlag nach einem der vorhergehenden Ansprüche, **dadurch gekennzeichnet, dass** die Stützfläche (19f) einen Außendurchmesser von 21 mm +/-1mm und einen Innendurchmesser von 13mm +/- 1mm aufweist.

7. Beschlag nach Anspruch 6, **dadurch gekennzeichnet, dass** die Rille (19g) als wenigstens abschnittsweise umlaufende Rille auf einem Kreis mit einem Durchmesser von 16mm +/- 1mm verläuft.

8. Beschlag nach einem der vorhergehenden Ansprüche, **dadurch gekennzeichnet, dass** sich die Stützfläche (19f) des Kragens über eine zylindrische Innenfläche (19i) des Kragens (19) radial nach innen hinein erstreckt.

9. Beschlag nach einem der Ansprüche 3 bis 8, **dadurch gekennzeichnet, dass** die Rille (19g) als Abdruck eines Wulstes (w) ausgebildet ist.

10. Fahrzeugsitz, insbesondere Kraftfahrzeugsitz, mit wenigstens einem Beschlag nach einem der vorhergehenden Ansprüche, einem Sitzteil (3), welches mit einem der beiden Beschlagteile (11, 12) verbunden ist, und einer Lehne (4), welche mit dem anderen den beiden Beschlagteile (11, 12) verbunden ist.

11. Verfahren zur Herstellung eines Beschlags für einen Fahrzeugsitz, insbesondere für einen Kraftfahrzeugsitz, mit einem ersten Beschlagteil (11) und einem zweiten Beschlagteil (12), welche relativ zueinander verdrehbar sind und welche miteinander in Getriebeverbindung stehen mittels eines Zahnkranzes (17) und eines mit dem Zahnkranz (17) kämmenden Zahnrades (16), und mit einem von einem Mitnehmer (21) angetriebenen, in Umfangsrichtung umlaufenden Exzenter (27, 27) zum Antrieb einer relativen Abwälzbewegung von Zahnrad (16) und Zahnkranz (17), wobei der Mitnehmer (21) mit Spiel in einem Kragen (19) und der Exzenter (27, 27) auf dem Kragen (19) des zweiten Beschlagteils (12) gelagert ist, und wobei der Kragen (19) an seinem freien Ende einen Bund (19b) aufweist, dessen Stirnseite eine axiale Stützfläche (19f) für den Mitnehmer (21) bildet, insbesondere zur Herstellung eines Beschlags nach einem der Ansprüche 1 bis 5, **dadurch gekennzeichnet, dass** bei der Ausbildung des Kragens (19) mit Bund (19b) zuerst der Kragen (19) gezogen wird, und dann mittels eines Werkzeuges (W₁, W₂, W₃, W₄) das Material des freien Endes des Kragens (19) wenigstens teilweise radial verdrängt wird, um den Bund (19b) mit der Stützfläche (19f) auszubilden, wobei das Werkzeug (W₁, W₂, W₃, W₄) einen Wulst (w) aufweist, welcher wenigstens teilweise das Material des freien Endes des Kragens (19) radial verdrängt und der Wulst (w) in der Stützfläche (19f) eine Rille (19g) ausbildet.

## Claims

1. Fitting for a vehicle seat, in particular for a motor vehicle seat,
a) comprising a first fitting part (11) and a second fitting part (12), which are rotatable relative to each other and which are in geared connection with each other by means of a toothed ring (17) and a gear wheel (16) meshing with the toothed ring (17), and
b) comprising an eccentric (27, 27) which is driven by a driver (21), revolves in the circumferential direction and is intended for driving a relative rolling movement of the gear wheel (16) and the toothed ring (17), wherein the driver (21) is mounted with play in a collar (19) of the second fitting part (12) and the eccentric (27, 27) is mounted on the collar (19) of the second fitting part (12), and wherein the free end of the collar (19) has a flange (19b), the end side of which forms an axial supporting surface (19f) for the driver (21), **characterized in that**
c) the flange (19b) has a groove (19g) in the supporting surface (19f), wherein after the drawing of the collar (19), the flange (19b) is formed by deforming the free end of the collar (19) with a radial displacement of the material, wherein the groove (19g) is formed within the supporting surface (19f) in order to improve the radial displacement of the material.

2. Fitting according to Claim 1, **characterized in that** at least sections of the groove (19g) run in the circumferential direction.

3. Fitting according to Claim 2, **characterized in that** the groove (19g) is formed in a continuously encircling manner and equidistantly from the inner edge of the supporting surface (19f).

4. Fitting according to Claim 2 or 3, **characterized in that** the groove (19g) is placed in the supporting surface (19f) closer to the inner edge than to the outer edge of the supporting surface (19f).

5. Fitting according to one of the preceding claims, **characterized in that** the groove (19g) has a depth of 0.5mm +/- 0.2mm.

6. Fitting according to one of the preceding claims, **characterized in that** the supporting surface (19f) has an outside diameter of 21mm +/- 1mm and an inside diameter of 13mm +/- 1mm.

7. Fitting according to Claim 6, **characterized in that** the groove (19g) in the form of at least partially encircling groove runs on a circle with a diameter of 16mm +/- 1mm.

8. Fitting according to one of the preceding claims, **characterized in that** the supporting surface (19f) of the collar extends radially inward over a cylindrical inner surface (19i) of the collar (19).

9. Fitting according to one of Claims 3 to 8, **characterized in that** the groove (19g) is formed as an impression of the bead (w).

10. Vehicle seat, in particular motor vehicle seat, comprising at least one fitting according to one of the preceding claims, a seat part (3) which is connected to one of the two fitting parts (11, 12), and a backrest (4) which is connected to the other of the two fitting parts (11, 12).

11. Method for producing a fitting for a vehicle seat, in particular for a motor vehicle seat, comprising a first fitting part (11) and a second fitting part (12), which are rotatable relative to each other and which are in geared connection with each other by means of a toothed ring (17) and a gear wheel (16) meshing with the toothed ring (17), and comprising an eccentric (27, 27) which is driven by a driver (21), revolves in the circumferential direction and is intended for driving a relative rolling movement of the gear wheel (16) and the toothed ring (17), wherein the driver (21) is mounted with play in a collar (19) of the second fitting part (12) and the eccentric (27, 27) is mounted on the collar (19) of the second fitting part (12), and wherein the free end of the collar (19) has a flange (19b), the end side of which forms an axial supporting surface (19f) for the driver (21), in particular for producing a fitting according to one of claims 1 to 5, **characterized in that**, during the formation of the collar (19) with the flange (19b), first of all the collar (19) is drawn, and then the material of the free end of the collar (19) is at least partially displaced radially by means of a tool (W₁, W₂, W₃, W₄) in order to form the flange (19b) with the supporting surface (19f), wherein the tool (W₁, W₂, W₃, W₄) has a bead (w) which at least partially radially displaces the material of the free end of the collar (19) and the bead (w) forms a groove (19g) in the supporting surface (19f).

## Revendications

1. Ferrure pour un siège de véhicule, en particulier pour un siège de véhicule automobile,
a) comprenant une première partie de ferrure (11) et une deuxième partie de ferrure (12), lesquelles peuvent tourner l'une par rapport à l'autre et lesquelles sont en liaison par engrenage l'une avec l'autre au moyen d'une couronne dentée (17) et d'une roue dentée (16) s'engrenant avec la couronne dentée (17), et
b) comprenant un excentrique (27, 27), entraîné par un élément d'entraînement (21) et tournant dans la direction périphérique, servant à l'entraînement d'un mouvement de roulement relatif de la roue dentée (16) et de la couronne dentée (17), l'élément d'entraînement (21) étant monté avec jeu dans un collet (19) et l'excentrique (27, 27) étant monté sur le collet (19) de la deuxième partie de ferrure (12), et le collet (19) comprenant, à son extrémité libre, un épaulement (19b) dont le côté frontal forme une surface d'appui axiale (19f) pour l'élément d'entraînement (21),
**caractérisée en ce que**
c) l'épaulement (19b) a une rainure (19g) dans la surface d'appui (19f), l'épaulement (19b) étant, après l'emboutissage du collet (19), formé par façonnage de l'extrémité libre du collet (19) à l'aide d'un refoulement de matière radial, la rainure (19g) étant formée à l'intérieur de la surface d'appui (19f) pour améliorer le refoulement de matière radial.

2. Ferrure selon la revendication 1, **caractérisée en ce que** la rainure (19g) s'étend au moins dans certaines régions dans la direction périphérique.

3. Ferrure selon la revendication 2, **caractérisée en ce que** la rainure (19g) est formée de manière périphérique et continue et de manière équidistante du bord intérieur de la surface d'appui (19f).

4. Ferrure selon la revendication 2 ou 3, **caractérisée en ce que** la rainure (19g) est placée dans la surface d'appui (19f) plus près du bord intérieur que du bord extérieur de la surface d'appui (19f).

5. Ferrure selon l'une quelconque des revendications précédentes, **caractérisée en ce que** la rainure (19g) présente une profondeur de 0,5 mm +/- 0,2 mm.

6. Ferrure selon l'une quelconque des revendications précédentes, **caractérisée en ce que** la surface d'appui (19f) présente un diamètre extérieur de 21 mm +/- 1 mm et un diamètre intérieur de 13 mm +/- 1 mm.

7. Ferrure selon la revendication 6, **caractérisée en ce que** la rainure (19g) s'étend, en tant que rainure périphérique au moins dans certaines régions, sur un cercle de diamètre de 16 mm +/- 1 mm.

8. Ferrure selon l'une quelconque des revendications précédentes, **caractérisée en ce que** la surface d'appui (19f) du collet s'étend radialement vers l'intérieur au-dessus d'une surface interne cylindrique (19i) du collet (19).

9. Ferrure selon l'une quelconque des revendications 3 à 8, **caractérisée en ce que** la rainure (19g) est réalisée sous forme d'empreinte d'un bourrelet (w).

10. Siège de véhicule, en particulier siège de véhicule automobile, comprenant au moins une ferrure selon l'une quelconque des revendications précédentes, une partie d'assise (3), laquelle est reliée à l'une des deux parties de ferrure (11, 12), et un dossier (4), lequel est relié à l'autre des deux parties de ferrure (11, 12).

11. Procédé de fabrication d'une ferrure pour un siège de véhicule, en particulier pour un siège de véhicule automobile, comprenant une première partie de ferrure (11) et une deuxième partie de ferrure (12), lesquelles peuvent tourner l'une par rapport à l'autre et lesquelles sont en liaison par engrenage l'une avec l'autre au moyen d'une couronne dentée (17) et d'une roue dentée (16) s'engrenant avec la couronne dentée (17), et comprenant un excentrique (27, 27), entraîné par un élément d'entraînement (21) et tournant dans la direction périphérique, servant à l'entraînement d'un mouvement de roulement relatif de la roue dentée (16) et de la couronne dentée (17), l'élément d'entraînement (21) étant monté avec jeu dans un collet (19) et l'excentrique (27, 27) étant monté sur le collet (19) de la deuxième partie de ferrure (12), et le collet (19) comprenant, à son extrémité libre, un épaulement (19b) dont le côté frontal forme une surface d'appui axiale (19f) pour l'élément d'entraînement (21), en particulier de fabrication d'une ferrure selon l'une quelconque des revendications 1 à 5, **caractérisé en ce que**, lors de la formation du collet (19) doté de l'épaulement (19b), le collet (19) est tout d'abord embouti puis la matière de l'extrémité libre du collet (19) est refoulée radialement au moins partiellement au moyen d'un outil (W₁, W₂, W₃, W₄), pour former l'épaulement (19b) doté de la surface d'appui (19f), l'outil (W₁, W₂, W₃, W₄) comprenant un bourrelet (w), lequel refoule radialement au moins partiellement la matière de l'extrémité libre du collet (19), et le bourrelet (w) formant une rainure (19g) dans la surface d'appui (19f).
